(19) Europäisches Patentamt
European Patent Office
Office européen des brevets

(11) Veröffentlichungsnummer: **0 020 299**
**B1**

(12) # EUROPÄISCHE PATENTSCHRIFT

(45) Veröffentlichungstag der Patentschrift: **09.02.83**

(51) Int. Cl.³: **C 07 D 403/12**, C 09 B 57/04, C 08 K 5/34

(21) Anmeldenummer: **80810162.0**

(22) Anmeldetag: **14.05.80**

(54) **Nickelkomplexe von Azinen, Verfahren zu deren Herstellung, Verfahren zum Pigmentieren hochmolekularen organischen Materials sowie das so enthaltene Material.**

(30) Priorität: **23.05.79 CH 4842/79**

(43) Veröffentlichungstag der Anmeldung: **10.12.80 Patentblatt 80/25**

(45) Bekanntmachung des Hinweises auf die Patenterteilung: **09.02.83 Patentblatt 83/6**

(84) Benannte Vertragsstaaten: **CH DE FR GB IT LI**

(56) Entgegenhaltungen:
**US-A-4 022 770**
**US-A-4 024 132**

**Die Akte enthält technische Angaben, die nach dem Eingang der Anmeldung eingereicht wurden und die nicht in dieser Patentschrift enthalten sind.**

(73) Patentinhaber: **CIBA-GEIGY AG, Patentabteilung Postfach, CH-4002 Basel (CH)**

(72) Erfinder: **Iqbal, Abul, Dr., Im Schaiengarten 1, CH-4107 Ettingen (CH)**
Erfinder: **Lienhard, Paul, Dr., Kirschgartenstrasse 14, CH-4402 Frenkendorf (CH)**
Erfinder: **Pugin, André, Dr., Grenzacherweg 301, CH-4125 Riehen (CH)**

**EP 0 020 299 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

Nickelkomplexe von Azinen, Verfahren zu deren Herstellung, Verfahren zum Pigmentieren hochmolekularen organischen Materials sowie das so enthaltene Material

Die Erfindung betrifft 1 : 1-Nickelkomplexe von Azinen der Formel I oder einer dazu tautomeren Form

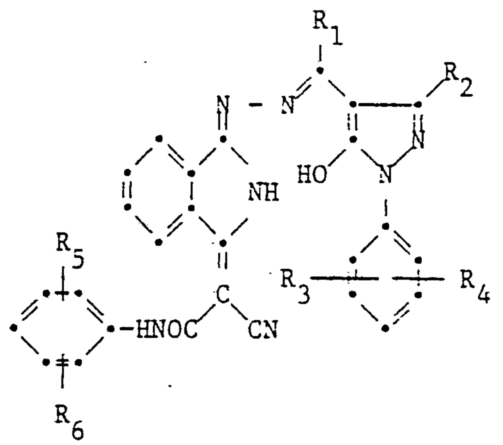

(I)

worin $R_1$ ein H oder Methyl, $R_2$ Methyl oder Carbamoyl, $R_3$ H oder Chlor, $R_4$ H, Chlor, Methyl, Trifluormethyl oder Sulfamoyl, $R_5$ H oder Chlor, $R_6$ H, Chlor, Brom, Methyl, Methoxy, Trifluormethyl, Carbamoyl oder Alkanoylamino mit 2—4 C-Atomen bedeuten, wobei für den Fall, daß $R_2$ für Carbamoyl steht, mindestens zwei der Substituenten $R_3$—$R_6$ Halogenatome und/oder Trifluormethylgruppen bedeuten.

Bevorzugt sind Metallkomplexe der Formel I, worin $R_1$ H, $R_2$ Methyl, $R_3$ H oder Chlor, $R_4$ H, Chlor, Methyl oder Trifluormethyl, $R_5$ Chlor und $R_6$ H, Chlor, Methyl oder Trifluormethyl bedeuten.

Ebenfalls bevorzugt sind die Nickelkomplexe der erwähnten Azine.

Die Azine der Formel I erhält man nach an sich bekanntem Verfahren durch Kondensation des Hydrazons der Formel

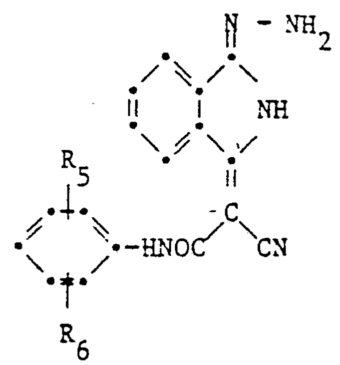

(II)

worin $R_5$ und $R_6$ die oben angegebenen Bedeutungen haben, mit einer Oxoverbindung der Formel

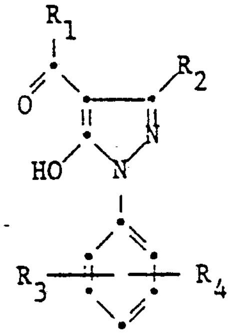

(III)

worin $R_1$, $R_2$, $R_3$ und $R_4$ die oben angegebenen Bedeutungen haben oder einem funktionellen Derivat

davon, beispielsweise einem Anil.

Die Umsetzung erfolgt vorzugsweise bei Temperaturen zwischen 50—130°C in Wasser oder in einem organischen Lösungsmittel, wie Methanol, Äthanol, Isopropanol, Eisessig, Dioxan, Dimethylformamid, N-Methylpyrrolidon, Butyrolakton, Glykolmonomethyläther oder o-Dichlorbenzol.

Da die Azine in der Regel in den zur Umsetzung verwendeten Lösungsmitteln schwer löslich sind, lassen sie sich leicht durch Filtration isolieren. Allfällige Verunreinigungen können durch Auswaschen entfernt werden.

Zur Überführung in die Metallkomplexe werden die Azine der Formel I mit nickelabgebenden Mitteln behandelt. Man verwendet vorzugsweise die Nickel-Formiate, Acetate oder Stearate. Die Metallisierung findet beispielsweise in Wasser, gegebenenfalls unter Zugabe eines Dispergators, zweckmäßig aber in einem der oben genannten Lösungsmittel statt.

Die neuen Farbstoffe stellen wertvolle Pigmente dar, welche in feinverteiler Form zum Pigmentieren von hochmolekularem organischem Material verwendet werden können, z. B. Celluloseäthern und -estern, wie Äthylcellulose, Nitrocellulose, Celluloseacetat, Cellulosebutyrat, natürliche Harze oder Kunstharze, wie Polymerisationsharze oder Kondensationsharze, z. B. Aminoplaste, insbesondere Harnstoff- und Melamin-Formaldehydharze, Alkydharze, Phenoplaste, Polycarbonate, Polyolefine, wie Polystyrol, Polyvinylchlorid, Polyäthylen, Polypropylen, Polyacrylnitril, Polyacrylsäureester, Polyamiden, Polyurethanen oder Polyester, Gummi, Casein, Silikon und Silikonharzen einzeln oder in Mischungen.

Dabei spielt es keine Rolle, ob die erwähnten hochmolekularen Verbindungen als plastische Massen, Schmelzen oder in Form von Spinnlösungen, Lacken, Anstrichstoffen oder Druckfarben vorliegen. Je nach Verwendungszweck erweist es sich als vorteilhaft, die neuen Pigmente als Toner oder in Form von Präparaten zu verwenden.

Die erhaltenen Färbungen zeichnen sich durch gute allgemeine Pigmenteigenschaften, insbesondere durch ausgezeichnete Licht-, Hitze-, Wetter-, Überlackier- und Migrationsechtheit, durch Oberflächenglanz und durch für Metallkomplexe unerwartete hohe Brillanz des Farbtons und hohe Farbstärke aus. Die Pigmente beeinflussen die mechanischen Eigenschaften der Substrate wenig, insbesondere fördern sie die Verzugseigenschaften von Kunststoffteilen nicht. Pigmentierte Fasern zeigen allgemein ein hohes Echtheitsniveau.

Die Pigmente können in der Form, wie sie in der Synthese anfallen, oder in leicht gemahlener Form eingesetzt werden und liefern dann opake Ausfärbungen. Man kann sie aber auch einer intensiveren Mahlung unterziehen und erhält dann transparente Ausfärbungen, wie beispielsweise farbstarke Metalleffektlackierungen. Ein weiterer Vorzug der neuen Pigmente ist ihre gute Dispergierbarkeit beispielsweise in Lacken und Kunststoffen. Anreibungen der Pigmente in Lacken zeichnen sich durch ein günstiges Fließverhalten aus.

## Beispiel 1

5,06 g 1-(Cyano-p-chlorphenylcarbamoylmethylen)-3-hydrazono-isoindolin, aus 1-(Cyano-p-chlorphenylcarbamoylmethylen)-3-imino-isoindolin und Hydrazinhydrat hergestellt, und 4,6 g 1-p-Chlorphenyl-3-methyl-4-anilinomethylen-5-pyrazolon werden in 150 ml Eisessig 1 Stunde bei 100°C gerührt. Das Reaktionsgemisch wird heiß abfiltriert. Der Filterrückstand wird mit Eisessig und Äthanol gut gewaschen und bei 80°C unter Vakuum getrocknet. Man erhält 3,3 g (39,5% d. Theorie) eines rot-orangen Farbstoffes der Zusammensetzung $C_{28}H_{19}Cl_2N_7O_2$.

Die Umsetzung des so erhaltenen Liganden mit Nickelacetat.$4H_2O$ (Theorie + 10% Überschuß) in 50 ml Dimethylformamid während 2¹/₂ Stunden bei 110°C führt zu einem 1 : 1 Nickel(2)-Komplex (18% d. Theorie), der Formel

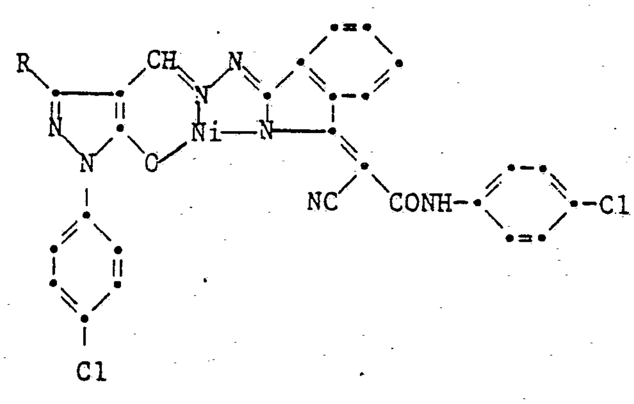

(IV)

(R = $CH_3$) der PVC und Lacke in scharlachroten Tönen von ausgezeichneter Licht-, Wetter- und Migrationsechtheit färbt.

Mikroanalyse $C_{28}H_{17}Cl_2N_7NiO_2$ (MG 613,1)

| | | | | |
|---|---|---|---|---|
| ber | C 54,85 | H 2,8 | N 15,99 | Ni 9,58% |
| gef. | C 54,6 | H 2,7 | N 16,1 | Ni 9,62% |

Beispiel 2

84,44 g (0,25 Mol) 1-(Cyano-p-chlorphenylcarbamoylmethylen)-3-hydrazono-isoindolin, aus 1-(Cyano-p-chlorphenylcarbamoylmethylen)-3-imino-isoindolin und Hydrazinhydrat hergestellt, und 85,1 g (0,25 Mol) 1-p-Chlorphenyl-3-carbamoyl-4-anilinomethylen-5-pyrazolon werden in 800 ml DMF 2½ Stunden bei 130—140°C gerührt. Anschließend wird die dunkle Lösung mit 68,5 g Nickelacetat.$4H_2O$ (10% Überschuß) versetzt und weitere 2½ Stunden bei 120—125°C gerührt. Das Reaktionsprodukt wird heiß abfiltriert. Der Filterrückstand wird mit Dimethylformamid und Äthanol gut gewaschen und bei 80°C unter Vakuum getrocknet. Man erhält 26,2 g (16,3% d. Theorie) eines organgeroten Nickelkomplexes der Zusammensetzung $C_{28}H_{16}Cl_2N_8NiO_3$ und der Formel IV (nur eine der möglichen isomeren bzw. tautomeren Formen wurde berücksichtigt) (R = $CONH_2$).

Der oben wiedergegebene 1 : 1 $Ni^{+2}$-Komplex färbt PVC und Lacke in orangen Tönen von ausgezeichneter Licht-, Wetter- und Migrationsechtheit.

Mikroanalyse $C_{28}H_{16}Cl_2N_8NiO_3$

| | | | | |
|---|---|---|---|---|
| ber. | C 52,3 | H 2,7 | N 17,4 | Ni 8,94% |
| gef. | C 52,38 | H 2,51 | N 17,45 | Ni 9,14% |

Nach dem Verfahren von Beispiel 2 werden die 1 : 1-Nickelkomplexe untenstehender Formel (nur eine der möglichen isomeren bzw. tautomeren Formen wurde hier einfachheitshalber berücksichtigt) synthetisiert, wobei $R_1'$, $R_2'$, $R_3'$ und $R_4'$ die in der Tabelle I angegebene Bedeutung haben. Die Ausgangsprodukte sind nach bekannten Methoden herstellbar.

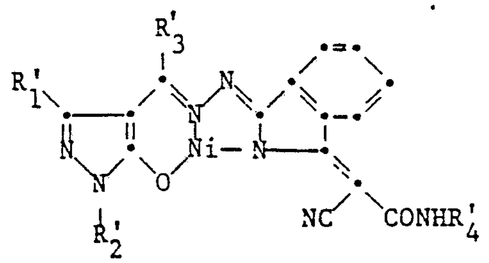

Tabelle I

| Beispiel Nr. | $R_1'$ | $R_2'$ | $R_3'$ | $R_4'$ | Nuance in PVC |
|---|---|---|---|---|---|
| 3 | $CH_3$— | p-Chlorphenyl | $CH_3$ | p-Chlorphenyl | scharlach |
| 4 | $CH_3$— | Phenyl | H | 3,4-Dichlorphenyl | scharlach |
| 5 | $H_2NOC$— | Phenyl | H | 3,4-Dichlorphenyl | orange |
| 6 | $CH_3$— | p-Chlorphenyl | H | 3,4-Dichlorphenyl | orange |
| 7 | $CH_3$— | p-Chlorphenyl | H | 3-Chlor-4-carbamoyl-phenyl | scharlach |
| 8 | $CH_3$— | m-Chlorphenyl | H | p-Chlorphenyl | scharlach |
| 9 | $CH_3$— | p-Chlorphenyl | H | 2-Methoxy-5-chlorphenyl | orange |
| 10 | $CH_3$— | p-Chlorphenyl | H | o-Chlorphenyl | orange |
| 11 | $CH_3$— | p-Chlorphenyl | H | 2,4-Dichlorphenyl | orangerot |
| 12 | $CH_3$— | p-Chlorphenyl | H | 3-Chlor-4-methyl-phenyl | orangerot |

Fortsetzung

| Beispiel Nr. | $R'_1$ | $R'_2$ | $R'_3$ | $R'_4$ | Nuance in PVC |
|---|---|---|---|---|---|
| 13 | $CH_3-$ | p-Chlorphenyl | H | m-Chlorphenyl | orange |
| 14 | $CH_3-$ | 2,5-Dichlorphenyl | H | Phenyl | rot |
| 15 | $CH_3-$ | 3-Sulfamoylphenyl | H | 3,4-Dichlorphenyl | orange |
| 16 | $-CONH_2$ | p-Chlorphenyl | H | 3-Trifluormethylphenyl | orange |
| 17 | $CH_3-$ | m-Chlorphenyl | H | p-Chlorphenyl | orangerot |
| 18 | $-CONH_2$ | p-Chlorphenyl | H | 2-Methyl-4-chlor-phenyl | orange |
| 19 | $-CONH_2$ | p-Chlorphenyl | H | m-Chlorphenyl | orange |
| 20 | $-CONH_2$ | p-Chlorphenyl | H | 3-Chlor-4-methyl-phenyl | orange |
| 21 | $-CONH_2$ | p-Chlorphenyl | H | 2-Methoxy-5-chlor-phenyl | orange |
| 22 | $-CONH_2$ | p-Chlorphenyl | H | 2-Methyl-3-chlor-phenyl | orange |
| 23 | $-CONH_2$ | p-Methylphenyl | H | 3,4-Dichlorphenyl | orange |
| 24 | $-CONH_2$ | m-Chlorphenyl | H | 3-Chlor-4-methyl-phenyl | orange |
| 25 | $-CONH_2$ | p-Chlorphenyl | H | 3,4-Dichlorphenyl | orange |
| 26 | $CH_3-$ | 2,5-Dichlorphenyl | H | 3-Chlor-4-methyl-phenyl | rot |
| 27 | $CH_3-$ | 2,5-Dichlorphenyl | H | p-Methoxyphenyl | rot |
| 28 | $-CH_3$ | m-Trifluormethyl-phenyl | H | m-Trifluormethyl-phenyl | orangerot |
| 29 | $-CH_3$ | m-Trifluormethyl-phenyl | H | p-Chlorphenyl | orangerot |
| 30 | $-CH_3$ | p-Chlorphenyl | H | m-Trifluormethyl-phenyl | orangerot |
| 31 | $-CH_3$ | 2,5-Dichlorphenyl | H | p-Bromphenyl | rot |

Beispiel 32

34,38 g (0,17 Mol) 1-Phenyl-3-methyl-4-formyl-5-pyrazolon und 51,51 g (0,17 Mol) 1-(Cyano-phenyl-carbamoylmethylen)-3-hydrazono-isoindolin, aus 1-(Cyano-phenylcarbamoylmethylen)-3-iminoisoindolin und Hydrazinhydrat hergestellt, werden in 1000 ml Äthylcellusolve 3 Stunden bei 110—115°C gerührt. Die resultierende braune Suspension wird auf 90°C abgekühlt und filtriert. Das Nutschgut wird mit Äthylcellusolve und Sprit gewaschen und über Nacht bei 80°C unter Vakuum getrocknet. Man erhält 57 g (69% der Theorie) des Liganden in Form eines braunen Pulvers.

Mikroanalyse: $C_{28}H_{21}N_7O_2$ (MG 487,52)
ber. C 68,98 H 4,34 N 20,11%

gef. C 68,6 H 4,4 N 20,4%

Die Umsetzung von 46,8 g (0,096 Mol) des obigen Liganden mit 26,3 g (0,105 Mol) Nickelacetat.$4H_2O$ in 800 ml Dimethylformamid während 4 Stunden bei 120—125°C ergibt 20,3 g (39% der Theorie) eines orangeroten Nickelkomplexes der Zusammensetzung

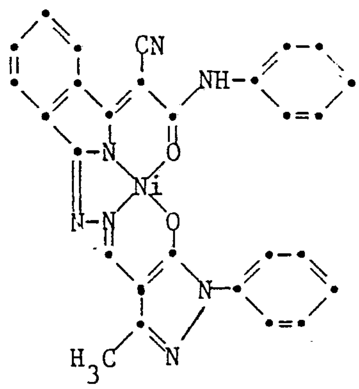

Mikroanalyse: $C_{28}H_{19}N_7O_2Ni$ (MG 544,21)

| | | | | |
|---|---|---|---|---|
| ber. | C 61,80 | H 3,25 | N 18,02 | Ni 10,79% |
| gef. | C 62,4 | H 3,7 | N 17,9 | Ni 11,4% |

Das so erhaltene Nickelkomplex-Pigment färbt Kunststoffe und Lacke in scharlachroten Tönen von ausgezeichneten Echtheiten.

## Beispiele 33—37

Nach dem Verfahren von Beispiel 2 werden die 1 : 1-Nickelkomplexe untenstehender Formel (nur eine der möglichen isomeren bzw. tautomeren Formen wurden hier einfachheitshalber berücksichtigt) synthetisiert, wobei $R_1'$, $R_2'$, $R_3'$ und $R_4'$ die in der Tabelle II angegebene Bedeutung haben. Die Ausgangsprodukte sind nach bekannten Methoden zugänglich.

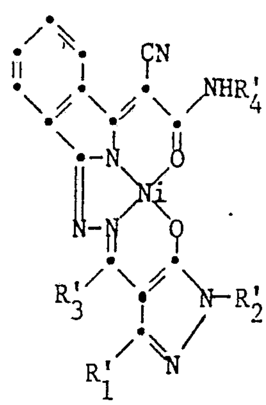

Tabelle II

| Beispiel Nr. | $R_1'$ | $R_2'$ | $R_3'$ | $R_4'$ | Nuance in PVC |
|---|---|---|---|---|---|
| 33 | $CH_3$ | p-Methylphenyl | H | p-Chlorphenyl | rot |
| 34 | $CH_3$ | p-Chlorphenyl | H | p-Acetylaminophenyl | rot |
| 35 | $CH_3$ | p-Chlorphenyl | H | o-Methoxyphenyl | orange |
| 36 | $CH_3$ | 3-Sulfamoylphenyl | H | 3,4-Dichlorphenyl | rot |
| 37 | $CH_3$ | p-Methylphenyl | $CH_3$ | Phenyl | rot |

Beispiel 38

10 g Titandioxyd und 2 g des nach Beispiel 1 hergestellten Pigmentes werden mit 88 g einer Mischung von 26,4 g Kokosalkylharz, 24,0 g Melamin-Formaldehydharz (50% Festkörpergehalt), 8,8 g Äthylenglykolmonomethyläther und 28,8 g Xylol während 48 Stunden in einer Kugelmühle vermahlen.
Wird dieser Lack auf eine Aluminiumfolie gespritzt, 30 Minuten bei Raumtemperatur vorgetrocknet und dann während 30 Minuten bei 120° C eingebrannt, dann erhält man eine Scharlach-Lackierung, die sich durch eine sehr gute Überlackier-, Licht- und Wetterechtheit auszeichnet.

Beispiel 39

In einem Laboratoriums-Kneter von 250 Vol.-Teilen Inhalt legt man 25 Teile des gemäß Beispiel 1 hergestellten Pigmentes, 100 Teile feingemahlenes Natriumchlorid und 30 Teile Diacetonalkohol vor. Man knetet die Mischung während 5 Stunden unter Kühlung und trägt sie dann in 4000 Vol.-Teile Wasser ein. Natriumchlorid sowie Diacetonalkohol gehen in Lösung, das Pigment fällt aus. Man filtriert die Suspension, wäscht das Nutschgut gründlich mit Wasser und trocknet es im Vakuumtrockenschrank bei 80° C.

Beispiel 40

65 Teile stabilisiertes Polyvinylchlorid, 35 Teile Dioctylphthalat und 0,2 Teile des gemäß Beispiel 39 erhaltenen Pigmentes werden miteinander verrüht und dann auf einem Zweiwalzenkalander während 7 Minuten bei 160° C hin- und hergewalzt. Man erhält eine orangerot gefärbte Folie von sehr guter Licht- und Migrationsechtheit..

Beispiel 41

Verfährt man wie in Beispiel 39 beschrieben, fügt jedoch der Knetmasse 2,78 Teile Staybelite Resin (HERCULES) zu, so erhält man ein Pigment, enthaltend 10% Harz, das sich auszeichnet durch leichtere Einarbeitbarkeit und bessere Verteilbarkeit.

Beispiel 42

65 Teile stabilisiertes Polyvinylchlorid, 35 Teile Dioctylphthalat und 0,2 Teile des gemäß Beispiel 1 erhaltenen Pigmentes werden wie in Beispiel 35 beschrieben zu einer Folie verarbeitet. Diese wird nach dem Erkalten 7 Minuten bei Raumtemperatur, dann nochmals 7 Minuten bei 160° C gewalzt. Die so hergestellte kräftige orangerote Ausfärbung zeichnet sich durch gute Egalität und ein gutes Deckvermögen aus.

Beispiel 43

4 Teile des fein verteilten Pigments gemäß Beispiel 1 werden in 20 Teilen Lösungsmittel der folgenden Zusammensetzung eingerührt: 50 Teile Solvesso 150 (Gemisch aromatischer Kohlenstoffe), 15 Teile Butylacetat, 5 Teile Exkin II (Verlaufmittel auf Ketoximbasis), 25 Teile Methyl-Isobutylketon, 5 Teile Silikonöl (1% in Solvesso 150).
Nachdem die vollständige Feinverteilung erreicht ist (je nach Art des Rührers in ca. 15—60 Minuten), werden die Bindemittel zugesetzt, nämlich 48,3 Teile Baycryl L 530 (Acrylharz) (51% in Xylol/Butanol 3 : 1) und 23,7 Teile Maprenal TTX (Melaminharz) (55% in Butanol).
Nach kurzem Homogenisieren wird der Lack nach üblichen Methoden wie Spritzen und Tauchen oder speziell zur kontinuierlichen Beschichtung von Metallblechen im »Coil-Coating«-Verfahren appliziert und eingebrannt (Einbrennen 30 Minuten, 130° ). Die erhaltenen roten Lackierungen zeichnen sich aus durch sehr guten Verlauf, hohen Glanz und ausgezeichnete Feinverteilung des Pigmentes, sowie durch ausgezeichnete Wetterechtheiten.

**Patentansprüche**

1. 1 : 1-Nickelkomplexe von Azinen der Formel I oder einer dazu tautomeren Form

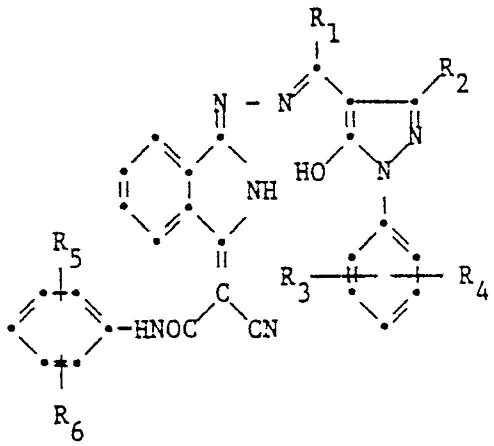

(I)

worin $R_1$ ein H oder Methyl, $R_2$ Methyl oder Carbamoyl, $R_3$ H oder Chlor, $R_4$ H, Chlor, Methyl, Trifluormethyl oder Sulfamoyl, $R_5$ H oder Chlor, $R_6$ H, Chlor, Brom, Methyl, Methoxy, Trifluormethyl, Carbamoyl oder Alkanoylamino mit 2—4 C-Atomen bedeuten, wobei für den Fall, daß $R_2$ für Carbamoyl steht, mindestens zwei der Substituenten $R_3$—$R_6$ Halogenatome und/oder Trifluormethylgruppen bedeuten.

2. Metallkomplexe gemäß Anspruch 1, worin $R_1$ H bedeutet.
3. Metallkomplexe gemäß Anspruch 1, worin $R_2$ Methyl bedeutet.
4. Metallkomplexe gemäß Anspruch 1, worin $R_4$ H, Chlor, Methyl oder Trifluormethyl bedeutet.
5. Metallkomplexe gemäß Anspruch 1, worin $R_5$ Chlor bedeutet.
6. Metallkomplexe gemäß Anspruch 1, worin $R_6$ H, Chlor, Methyl oder Trifluormethyl bedeutet.
7. Der 1 : 1-Nickel-Komplex des Azins der Formel

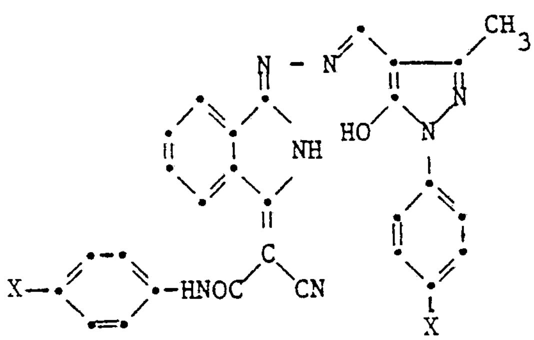

worin X ein H- oder Chloratom bedeutet.

8. Verfahren zur Herstellung von Metallkomplexen gemäß Anspruch 1, dadurch gekennzeichnet, daß man ein Azin der Formel I mit metallabgebenden Mitteln behandelt.
9. Verfahren zum Pigmentieren von hochmolekularem organischem Material gekennzeichnet durch die Verwendung von Nickelkomplexen gemäß Anspruch 1.
10. Hochmolekulares organisches Material enthaltend einen Nickelkomplex gemäß Anspruch 1.

**Claims**

1. A 1 : 1 nickel complex of an azine of the formula I or of a tautomer thereof

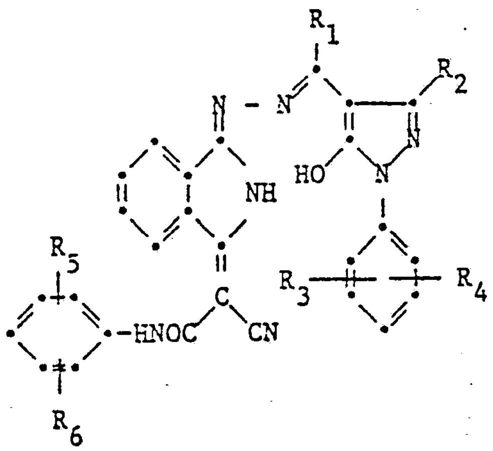

(I)

wherein $R_1$ is hydrogen or methyl, $R_2$ is methyl or carbamoyl, $R_3$ is hydrogen or chlorine, $R_4$ is hydrogen, chlorine, methyl, trifluormethyl or sulfamoyl, $R_5$ is hydrogen or chlorine, $R_6$ is hydrogen, chlorine, bromine, methyl, methoxy, trifluoromethyl, carbamoyl or alkanoylamino containing 2 to 4 carbon atoms, with the proviso that, if $R_2$ is carbamoyl, at least two of the substituents $R_3$ to $R_6$ are halogen atoms and/or trifluoromethyl groups.

2. A metal complex according to claim 1, wherein $R_1$ is hydrogen.

3. A metal complex according to claim 1, wherein $R_2$ is methyl.

4. A metal complex according to claim 1, wherein $R_4$ is hydrogen, chlorine, methyl or trifluoromethyl.

5. A metal complex according to claim 1, wherein $R_5$ is chlorine.

6. A metal complex according to claim 1, wherein $R_6$ is hydrogen, chlorine, methyl or trifluormethyl.

7. The 1 : 1 nickel complex of the azine of the formula

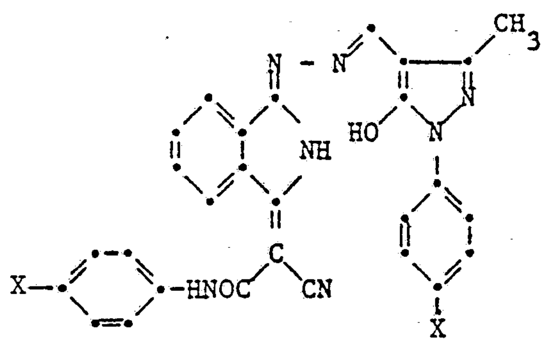

wherein X is a hydrogen or chlorine atom.

8. A process for the production of a metal complex according to claim 1, which comprises treating an azine of the formula I with a metal donor.

9. A process for pigmenting organic material of high molecular weight, which comprises the use of a nickel complex according to claim 1.

10. Organic material of high molecular weight containing a nickel complex according to claim 1.

**Revendications**

1. Complexes de nickel au rapport 1 : 1 d'azines répondant à la formule I ou à une de ses formes tautomères

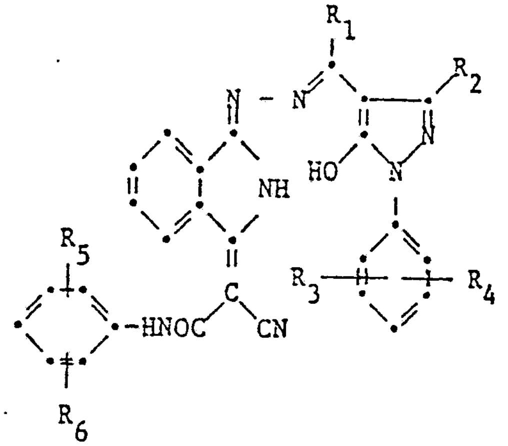

(II)

dans laquelle $R_1$ représente l'hydrogène ou un groupe méthyle, $R_2$ est un groupe méthyle ou carbamoyle, $R_3$ est l'hydrogène ou le chlore, $R_4$ est l'hydrogène ou le chlore ou un groupe méthyle, trifluorométhyle ou sulfamoyle, $R_5$ est l'hydrogène ou le chlore, $R_6$ est l'hydrogène, le chlore ou le brome ou un groupe méthyle, méthoxy, trifluorométhyle, carbamoyle ou alcanoylamino ayant 2 à 4 atomes de carbone, au moins deux des substituants $R_3$ à $R_6$ représentant des atomes d'halogènes et/ou des groupes trifluorométhyles lorsque $R_2$ désigne un groupe carbamoyle.

2. Complexes métalliques selon la revendication 1, dans lesquels $R_1$ est l'hydrogène.

3. Complexes métalliques selon la revendication 1, dans lesquels $R_2$ est un groupe méthyle.

4. Complexes métalliques selon la revendication 1, dans lesquels $R_4$ désigne l'hydrogène ou le chlore ou un groupe méthyle ou trifluorométhyle.

5. Complexes métalliques selon la revendication 1, dans lesquels $R_5$ désigne le chlore.

6. Complexes métalliques selon la revendication 1, dans lesquels $R_2$ désigne l'hydrogène ou le chlore ou un groupe méthyle ou trifluorométhyle.

7. Complexe de nickel au rapport 1 : 1 de l'azine de formule

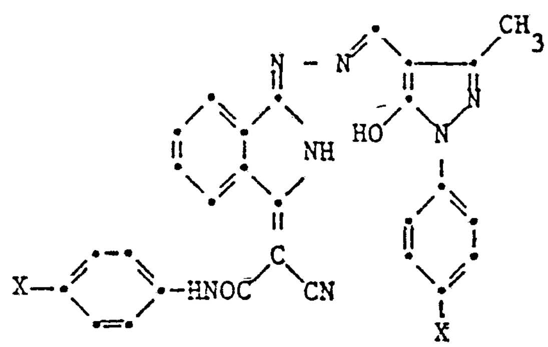

dans laquelle X désigne un atome d'hydrogène ou de chlore.

8. Procédé de préparation de complexes métalliques selon la revendication 1, caractérisé en ce qu'on traite une azine de formule I avec des agents cédant des métaux.

9. Procédé pour pigmenter des matières organiques de haut poids moléculaire, caractérisé en ce qu'on utilise des complexes de nickel selon la revendication 1.

10. Matière organique de haut poids moléculaire contenant un complexe de nickel selon la revendication 1.